# EUROPEAN PATENT SPECIFICATION

(11) **EP 2 906 426 B1**
(45) Date of publication and mention of the grant of the patent: **28.12.2016**
(21) Application number: 13766306.8
(22) Date of filing: 24.09.2013
(51) Int. Cl.: B32B 37/12, B32B 41/00

(54) **PROCESS FOR PRODUCING A LAMINATE WITH LONGITUDINALLY SPACED NON-LAMINATED AREAS AND APPARATUS FOR PRODUCING THE SAME**
VERFAHREN ZUM ERZEUGEN EINES LAMINATS MIT LÄNGS BEABSTANDETEN, NICHT LAMINIERTEN BEREICHEN UND VORRICHTUNG ZUR HERSTELLUNG DAVON
PROCÉDÉ DE PRODUCTION D'UN STRATIFIÉ AVEC DES ZONES NON STRATIFIÉES ESPACÉES LONGITUDINALEMENT ET APPAREIL DE PRODUCTION DE CELUI-CI

(30) Priority: 10.10.2012 EP 12187916
(43) Date of publication of application: 19.08.2015
(73) Proprietor: Nestec S.A., 1800 Vevey (CH)
(72) Inventor: GERBAULET, Arnaud, F-25160 Oye et Pallet (FR); ABEGGLEN, Daniel, CH-1439 Rances (CH); RUPPANNER, Bruno, CH-4565 Recherswil (CH)
(74) Representative: Borne, Patrice Daniel
(86) International application number: PCT/EP2013/069778
(87) International publication number: WO 2014/056718

(56) References cited:
- WO-A1-2010/104605
- WO-A2-2006/083517

## Description

### Field of the invention

The present invention relates to an in-line lamination process for producing a laminate with a specific pattern of laminated and non-laminated areas between a first web and a second web. The invention further relates to an apparatus for carrying out such process. The invention further relates to a laminate comprising uniformly repeated, adhesive-free non-laminated areas.

### Background

US patent 4960216 relates to tamper proof seals for containers such as bottles and the like. The seals are formed in a partially laminated web. The partially laminated web is formed by a first sheet onto which is applied an adhesive by a roll having a pattern structure. In particular, the roll is structured to apply in the longitudinal direction, continuous bands of adhesive and bands coated only with dots of adhesive. A second sheet is secured to the first sheet coated with adhesive by a pair of rollers which applies a sufficient pressure on the two sheets. The web is then passed through a cutting device that cuts or stamps out disc shaped seals. In such a process, the precision of the partially laminated pattern in the longitudinal direction is not critical because of the continuous longitudinal arrangement of the adhesive pattern. The precision of the position of the dots on the laminate and their relative spacing are not critical. The same laminated pattern is obtained on each disc irrespective of the cutting distance between two discs. Therefore, there is no control of the formed adhesive pattern in the device.

It is generally known to apply an adhesive onto a film or web and selectively clean parts of the film of web from adhesive.

US 2009/0178945 relates to a laminated lidstock and a method of making the same. The lidstock comprises a multi-layer substrate film attached to a support web by a pressure sensitive adhesive. The pressure sensitive adhesive is disposed between the substrate film and the support web except for a clear area disposed near and spaced from a first end of the laminated lidstock. Again, the clear area is formed as a longitudinal non-adhesively coated band. A registration device such as a mark, pattern or feature of the film or web, can be used for facilitating the advancement of the film of web in a controlled manner, into a packaging machine, where the film or web is used as lidstock to make individual package.

US 2004/0062916 relates to a method for producing a multi-ply web of flexible material such as paper and non-woven. Three plies of material are laminated together by gluing. A first lamination roll is driven in registry with a first glue transfer roll to press and glue a second web shaped flexible material to a first web shaped flexible material in a pattern corresponding to the first glue pattern. A second lamination roll is arranged after a second glue transfer roll to press and glue a third web shaped flexible material to the combined first and second web shaped flexible materials in a pattern corresponding to the aligned glue patterns.

The use of eye-mark for producing packaging is known. The eye-mark is a machine -recognizable mark, printed on web-fed packaging materials and is the reference point from which the machine will register other operations such as further decorations, heat sealing, or package cut-off.

WO-A-2010/104605 discloses a process of in-line lamination for producing a laminate comprising a specific partially laminated pattern comprising longitudinally spaced adhesive-free non- laminated areas between a first web and a second web and; wherein the first web is partially coated with an adhesive by coating a cylinder to form a non-continuous pattern in the longitudinal direction and the second web is laminated onto the first web to form the laminate with the spaced apart adhesive-free, and non-laminated area between the first and second webs.

The problem still lies with producing a laminate into which are positioned, in an accurate manner, adhesive-free non-laminated areas (called hereafter "non-laminated areas") which are uniformly spaced apart in the longitudinal direction of displacement of the laminate. It is important that these non-laminated areas are accurately positioned in all directions relative to each other and/or relative to other possible indicia such as a mark, a printing and/or decorative marking. If such areas are not properly positioned, this will result in an offset of the non-laminated area relative to such indicia and/or an offset of the non-laminated area(s) in the product individually cut from the laminate.

The present invention provides a solution to the aforementioned problem. The present invention may further provide additional advantages and/or resolve additional problems.

### Summary of the invention

An object of the present invention is to provide a process of in-line lamination for producing a laminate comprising a specific partially laminated pattern comprising longitudinally spaced apart adhesive-free non-laminated areas between a first web and a second web. The first web is partially coated with an adhesive by a coating cylinder to form a non-continuous adhesive pattern in the longitudinal direction and the second web is laminated onto the first web to form the laminate with the spaced apart adhesive-free, non laminated area between the first and second webs. The angular position of the coating cylinder relatively to the first web is adjusted during the lamination in function of the relative position of a registration mark provided on at least one of the two webs. The registration mark is preferably provided in the longitudinal direction at regularly spaced intervals on at least one of the two webs.

In particular, the invention provides, during lamination, a loop control of the angular position of the coating cylinder so as to be able to precisely control the positioning of the partially laminated pattern in the laminate. The loop control of the angular position of the coating cylinder ensures that the pattern of the non-laminated areas is uniform, at least in the longitudinal direction of displacement of the webs and laminate.

More preferably, the angular position of the coating cylinder is determined and subsequently adjusted relatively to one of the first or second web, by determining the angular position of the coating cylinder in relation to the relative position of the registration mark and by modifying the angular position of the coating cylinder in relation to a position of reference, as a function of the deviation of the determined angular position of the coating cylinder relative to the position of reference.

In a preferred mode, the registration mark is provided on the first web and the position of the registration mark is determined by sensing it at a predetermined distance upstream of the coating cylinder as the first web is moved longitudinally. Preferably, the registration mark is detected by an optical sensor such as a light-beam sensor or a magnetic sensor when the mark is formed of a material having detectable magnetic properties.

More particularly, the angular position of the coating cylinder is determined by providing the cylinder with a phase-control assembly comprising a gear associated to the cylinder with plurality of angular segments identifiable by a rotary angle detector, such as described in US patent 5357860.

In particular, as the adhesive coating cylinder is rotated on the web, the relative position of the cylinder is determined in relation to the position of the registration mark and these relative positions are compared to positions of reference and, in function of the deviation of these determined positions to the positions of reference, the angular position of the coating cylinder is adjusted accordingly.

The angular position of the coating cylinder is preferably modified by varying the rotational speed of the coating cylinder so that a displacement of the surface of the coating cylinder relative to the web is obtained in the longitudinal direction. The speed variation can be an increase or a decrease of the nominal speed of the coating cylinder. The variation of the rotational speed of the coating cylinder is small compared to the nominal speed in order to avoid creating too much tension on the web and/or wrinkles in the web. Preferably the speed variation is not higher than 5% of the nominal speed, most preferably not higher than 2%.

The pressure applied by the coating cylinder on the web is set to a value allowing the displacement of the surface of the cylinder (preferably a sliding of said surface) relative to the web without forming wrinkles. Normally, the web is maintained between the coating cylinder and a second cylinder or counter-cylinder positioned against the opposite surface of the web; the pressure being therefore assured by the two cylinders. The pressure is normally set to lower values than the pressure values utilized for a traditional adhesive coating process, in general of between 0.5 to 1.5 bar.

In a preferred mode of the method of the invention, the tension of the first web is adjusted in-line in the longitudinal direction as a result of the adjustment of the angular position of the coating cylinder.

Preferably, the tension of the web is adjusted by varying the speed of a tension roller device. In particular, the tension of the web is maintained sufficiently by controlling the circumferential speed of one of the roller of the tensioning device below the speed of the circumferential speed of the coating cylinder. In particular, the circumferential speed of the roller of the tensioning device is set between 0.5 and 2%, preferably about 1% below, the circumferential speed of the coating cylinder. A simple control can be obtained by selecting the tension roller so that it is of slightly smaller diameter (e.g., 1 mm or smaller) than the diameter of the coating cylinder and by driving the coating cylinder and the tension roller device at the same rotational speed.

A tension roller device generally consists of a pair of rollers; one of which is driven by a motor, and between which the web is passed and which is arranged for maintaining the web under sufficient tension. The tension roller device is generally arranged in a non-linear fashion relative to and between a web-driving roller device and the coating cylinder. The web-driving roller device may, for instance be a first lamination station for laminating the first web from at least two films. For example, the first web may be formed of at least two films having different elastic elongation properties. For example, a first film is relatively elastic such as PET and a second film is less elastic such as aluminium film.

Past the coating cylinder of the first web, a second web is laminated on the first web in a laminating station. The laminating station can be formed of a pair of pressing rollers for connecting the first and second webs together in the adhesively coated areas. In the non-adhesively coated areas, the first and second webs remain non-connected. For example, such areas can form a plurality of circular non-laminated areas, both longitudinally and laterally spaced apart in the laminate.

The first web can also be formed as a multi-layer laminate. For example, the first web is formed by in-line coating an adhesive on a first film, e.g., a PET film, and laminating a second film, e.g., aluminium film, onto the first film. In final, the laminate is formed of three layers, two of which forms the first web and the last layer forms the second web. For instance, the first web is formed of PET/Aluminium and the second web is a CPP (Cast Polypropylene) film. The final laminate is a multi-layer PET/Aluminium/CPP in which the CPP is partially laminated on the aluminium surface.

The registration mark can be provided on the outer surface of the web or, alternatively, in the interior of the web such as on the inner surface of one the films forming the web.

The registration mark is preferably an optically identifiable mark such as an eye-mark. However, magnetically-identifiable marks such as ferro-magnetic marks can be used. The technology of the sensor is therefore adapted to identify the said marks.

In an example, the registration mark is a black or coloured mark printed on the outer surface of the PET film of the web. The registration mark can be printed or applied by another suitable method in uniformly and longitudinally spaced fashion along or near one edge of the web.

Another object of the invention is for an apparatus for carrying out the lamination process as aforementioned wherein the apparatus comprises :
a lamination station for laminating the first web on the second web comprising an adhesive coating cylinder arranged for partially coating adhesive onto the first web,
a motor for driving the coating cylinder,
a first sensor arranged at a predetermined distance from the cylinder for sensing the registration mark on one of the two webs,
a second sensor arranged for detecting the angular position of the cylinder,
a control unit for receiving the input from the first and second sensors, determining the angular position of the cylinder relative to the position of the registration mark and varying the angular position of the cylinder as a function of a set position of reference.

The variation of the angular position of the coating cylinder is obtained by the control unit being arranged for varying the speed of the coating cylinder.

The apparatus further comprises a tension roller device arranged upstream of the coating cylinder for maintaining the web under a sufficient in-line tension.

In particular, the control unit controls the circumferential speed of one of the tension cylinder of the tensioning device below the speed of the circumferential speed of the coating cylinder.

For instance, the apparatus comprises a motor-driven tension cylinder of diameter smaller than the diameter of the coating cylinder and the control unit is arranged to control the rotational speed of the tensioning device at the same rotational speed as the rotational speed of the adhesive coating cylinder.

Another object of the invention concerns a laminate comprising a specific partially laminated pattern. In particular, the laminate comprises:
a. longitudinally and laterally spaced apart, adhesive-free non-laminated areas between a first web and a second web;
b. registration marks provided in the longitudinal direction, at regularly spaced intervals on at least one of the two webs,
c. at least one longitudinally spaced indicia, such as a printed pattern,
wherein the position of each non-laminated area is precisely positioned relative to said indicia within a longitudinal tolerance (L) lower than +/- 2 mm, preferably of 1.50 mm or lower

The invention further relates to the laminate obtainable by the method of the invention.

### Brief description of the drawings

The present invention is, as a matter of preferred examples, illustrated by reference to the following drawings.
Figure 1 represent an apparatus for carrying out the process of the invention according to a preferred embodiment,
Figure 2 represents a detail of the apparatus of Figure 1,
Figure 3 represents a plan view of the laminate showing discs when cut from the laminate and the non laminated areas positioned concentrically to the cut discs,
Figure 4 represents a detailed view of a disc-shaped die cut in the laminate with a concentric non-laminated area in accordance with the longitudinal and lateral dimensional tolerances of the invention.

### Detailed description of the invention

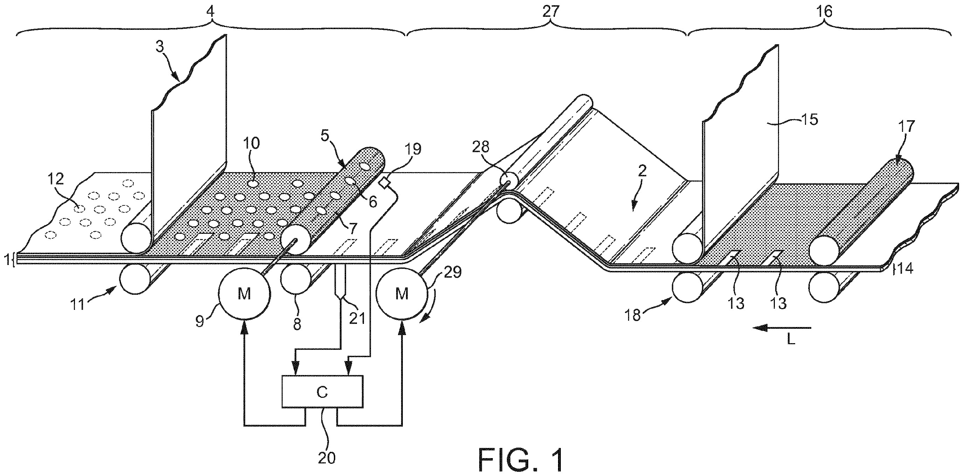

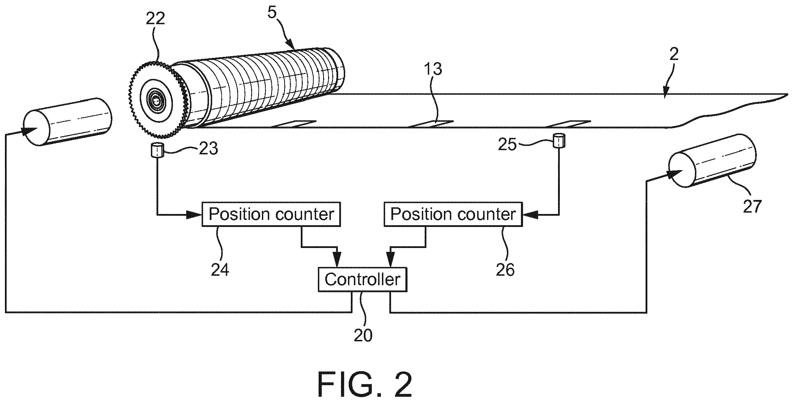

Figures 1 and 2 show an embodiment of the apparatus in which the partial lamination process of the invention is applied to a laminate 1 formed of first and second webs 2, 3 with a regulation loop mechanism in the lamination station 4 for the webs.

The lamination station 4 for laminating the first and second webs 2, 3 comprises an adhesive coating cylinder 5 which is arranged for partially coated adhesive onto the surface of the first web 2. More particularly, the coating cylinder comprises a generally cylindrical surface with adhesive-free surface portions 6 surrounded by a continuous adhesive surface portion 7. As known per se, the surface is structured in a suitable manner to be loaded with adhesive in the portion 7 and be free of adhesive in the portions 6. As known per se, the coating cylinder has a counter-roller 8 positioned on the opposite side of the web for applying a determined pressure on the web. Furthermore, the cylinder 5 is driven in rotation by a motor 9. As a result of the partial coating on the adhesive cylinder, the web 2 is given an adhesively coated surface with adhesive-free areas 10, such as of circular forms, which are longitudinally and laterally distributed on the web. Downstream of the coating cylinder 5, is positioned a lamination assembly formed by a pair of laminating rollers 11 receiving the first web 2 and a second web 3 therethrough. As a result of the applied partial adhesive pattern on the first web, the laminate 1 is formed with a series of non-laminated areas 12 between the first web and second web.

The improvement to the state-of-the art apparatus and process comprises the providing of registration marks 13, preferably, on or in the first web 2; such marks being produced by any suitable method such as printing, inserting, gluing of the inserts and so on. The registration marks are provided at regular spaced apart, preferably equal intervals in the longitudinal direction L of the advance of the web. Preferably, the registration marks are provided on the edge of the web but any other lateral location is technically possible.

As a matter of example, the first web may be formed of two films 14, 15 applied together in a first lamination station 16. The films may have different elongation properties. For instance, the first film 14 is a transparent PET film on which are printed the registration marks 13, preferably eye-marks at its outer surface. The first lamination station 16 comprises an adhesive coating cylinder 17 for applying a surface of adhesive on the first film 14 and a pair of laminating rollers 18 for pressing and laminating first and second films together. Of course, the present invention could also contemplate a web formed of a single film provided with registration marks. This example shows that the registration marks and the partial adhesive pattern can be applied to two different films, respectively, films 14 and 15.

The improvement further comprises a loop for regulating the angular position of the adhesive coating cylinder 5 during the lamination process in the partial lamination station. In a general manner, the regulation loop is based on the principle that:
- the angular position of the cylinder 5 is determined by a sensor 19 providing an input to a central controller 20;
- the relative position of the registration marks 13 is determined by a sensor 21 providing an input to the controller 20,
- these positions are computed in the controller and compared relative to reference positions stored in the controller and,
- when a variation is detected by the controller 20 relative to the reference positions, the angular position of the cylinder is varied.

The angular position of the coating cylinder is preferably varied by varying the rotational speed of the cylinder 5, such as by the controller providing output to to the motor 9 driving the cylinder in rotation. The controller is arranged for calculating an increase or a decrease of the cylindrical speed over a certain period of time necessary for correcting the angular position of the cylinder. In order to prevent too much stress on the web, the speed is varied within a limited variance of the nominal speed. For instance, the variation should not preferably exceed 5% of the nominal rotational speed of the coating cylinder (the nominal speed representing the speed before the correction). Also, the speed is preferably varied progressively rather than abruptly.

As shown in figure 2, the determination of the angular position of the coating cylinder may be obtained by providing the cylinder with a gear-type phase control assembly. In principle, the cylinder is provided with a gear 22 divided by a multitude of equal angular segments and a rotary encoder 23 able to indicate, by providing pulses, the number of the segments to a position counter 24. The position counter is arranged to generally calculate the phase position of the cylinder. An example for the determination of the angular position of a cylinder is described in US patent 5357860.

The determination of the registration marks is obtained similarly by a sensor 25, such as an optical sensing device (e.g., IR sensor) positioned at immediate proximity of the web. The sensor 25 is placed at a predetermined distance from the rotational axis of the cylinder. The position of the registration marks is so determined by a position counter 26 providing an input to the controller 20.

Finally, the regulation loop further comprises a comparison by the controller of the relative angular position of the cylinder relative to the registration mark on the web to a relative position of reference which can be stored in the memory of the controller. If a variation of this relative position is detected, the controller corrects the angular position of the cylinder by varying the rotational speed. The frequency of the regulation loop can be comprised between 100 Hz and 5 kHz for example.

The changes to the rotational speed of the coating cylinder provide a correction of the positioning of the first web relative to the cylinder. For this, the pressure cylinder (including its counter roller 11) is set so that a sliding of the web relative to the surface of the cylinder 5 is possible. In particular, the pressure of the cylinder on the web is typically lower than the lamination pressure of the first adhesive cylinder 17. For example, the pressure is set at about 1 bar. Therefore, when the speed of the coating cylinder 5 is varied, e.g., increased, the web 2 which is maintained under tension between the first and second lamination stations tends to slide relatively to the surface of the cylinder.

The apparatus of the invention may advantageously comprise a tension roller device 27 for maintaining the first web 2 under sufficient tension when the position of the cylinder is adjusted. The tension roller device comprises a pair of rollers disposed in a non-linear fashion relative to the first and second stations. A first roller 28 of the device is driven by a rotary motor 29 to drive the web through the device. In order for the web to be maintained under sufficient tension, the controller controls the circumferential speed of the roller to be below the circumferential speed of the cylinder. The "circumferential speed" is the speed measured at any point of the surface of the roller respectively, the coating cylinder in contact with the web.

In order to achieve this circumferential speed differential, the diameter of the roller 28 is slightly smaller than the diameter of the cylinder 5 but the rotational speed of the motor-driven roller 28 is controlled to be the same as the rotational speed of the coating cylinder so that any change of rotational speed on the cylinder 5 is immediately passed on the tension roller 28 by the controller. The "diameter" is the distance measured between two diametrically opposed points on the surface of the roller, respectively, coating cylinder. The rotational speed is the speed measured at the axis of the roller respectively, coating cylinder.

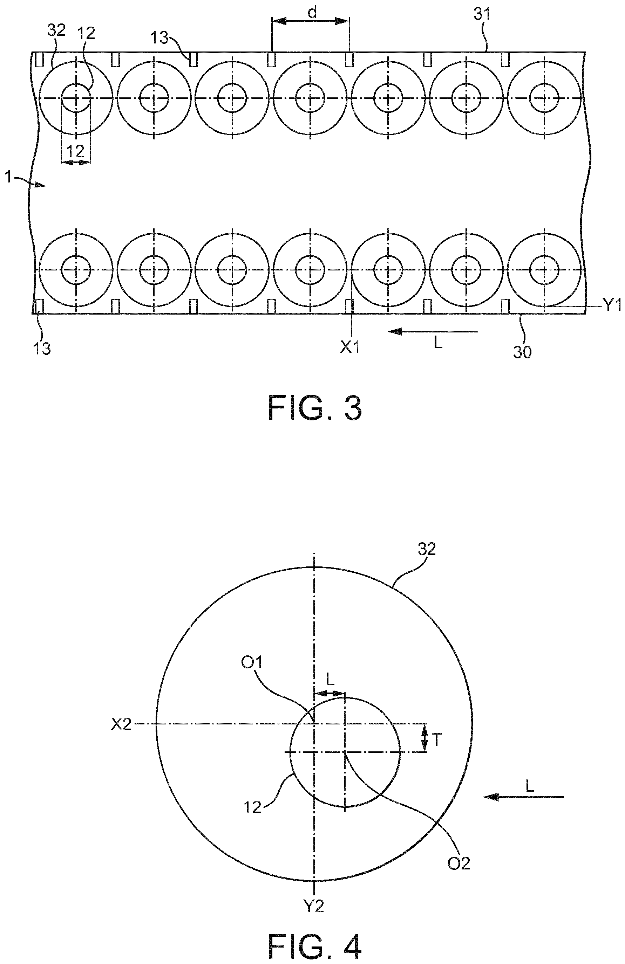

The invention further relates to the laminate 1 itself as illustrated in figure 3. The laminate comprises the first web 2 and a second web 3 partially laminated and comprising longitudinally and laterally spaced apart, adhesive-free non laminated areas 12 between the first and second webs. Registration marks, preferably eye-marks, are provided at least on the laminate edge 30, 31. It is preferred to provide one eye mark per individual pattern or areas 12. The registration marks are provided in the longitudinal direction of the laminate at regular spaced apart intervals (d). The marks are printed or applied by any other suitable technique onto at least of the webs. The marks may be optically and/or magnetically detectable. The laminate further comprises at least one indicia 32 associated to each non laminated area 12. The indicia may be a printed pattern. In the following example, the indicia correspond to a cut pattern in the laminate. For example, the indicia form a circular pattern concentrically and outwardly positioned with respect to a disc-shaped non-laminated area. This pattern may later serve as an indication for the cutting die to cut discs from the laminate.

As a matter of example, such discs may be membranes used for the producing of beverage capsules as described in WO 2012/110323. In such application to capsules, the non-laminated area of the laminate provides a liquid-tight sealing function in combination with a perforating member of a beverage production device, e.g., a coffee machine. Normally, the disc-shaped membrane is sealed onto a flange of a capsule's body. It is important that when the capsule is positioned and firmly held in the machine, the non-laminated area is precisely engaged by the perforating member. Therefore, it is of outmost importance that the non-laminated area is precisely positioned in the centre of the membrane with as less off-centering as possible. The laminate as produced ensures that the non-laminated areas are precisely positioned relative to the die cut patterns.

Figure 4 provides the determination of the tolerances of lamination-pattern positioning of the laminate of the invention. The coordinate of each registration mark is firstly expressed by X1, Y1. The coordinate of the pattern 32 is determined by measuring the distances X2, Y2 from X1, Y1. The line of intersection X1, Y1 represents the centre O1 of the pattern 32. The coordinate of the non-laminated area 12 is also determined by measuring the distances X3, Y3 from X1, Y1. The line of intersection X2, Y2 represents the centre 02 of this area. Finally, the positioning tolerance is calculated by measuring the distance between X2 and X3 in the longitudinal direction and the distance between Y2 and Y3 in the transversal direction. According to the invention, the longitudinal tolerance (L) obtained by the method of the invention is lower than +/- 2 mm, preferably of 1.50 mm or lower. The transversal tolerance obtained is lower than +/- 1.5 mm, preferably of 1 mm or lower.

## Claims

1. Process of in-line lamination for producing a laminate (1) comprising a specific partially laminated pattern comprising longitudinally spaced adhesive-free non-laminated areas (6) between a first web and a second web;
wherein the first web is partially coated with an adhesive by a coating cylinder (5) to form a non-continuous adhesive pattern in the longitudinal direction and the second web (3) is laminated onto the first web (2) to form the laminate with the spaced apart adhesive-free, non laminated areas (6) between the first and second webs (2, 3),
**characterized in that** the angular position of the coating cylinder (5) relatively to the first web (2) is adjusted during the lamination in function of the position of a registration mark (13) provided on at least one of the two webs;
and that such registration mark (13) being provided in the longitudinal direction at regularly spaced intervals on at least one of the two webs.

2. Process according to claim 2, wherein
angular position of the coating cylinder (5) is adjusted relatively to one of the first or second web, by determining the angular position of the coating cylinder (5) in relation to the relative position of the registration mark (13) and modifying the angular position of the coating cylinder (5) in relation to a position of reference as a function of the deviation of the determined angular position of the coating cylinder (5) to a position of reference.

3. Process according to claim 2, wherein
the angular position of the coating cylinder (5) is modified by varying the rotational speed of the coating cylinder so that a displacement of the surface of the cylinder relative to the web (2) is obtained in the longitudinal direction.

4. Process according to claim 3, wherein
the pressure of the coating cylinder (5) on the web (2) is set for allowing a displacement of the cylinder relative to the web without forming wrinkles on the web.

5. Process according to any of the preceding claims, wherein
the tension of the first web (2) is adjusted in-line in the longitudinal direction as a result of the adjustment of the angular position of the coating cylinder (5).

6. Process according to claim 5, wherein
the tension of the web (2) is adjusted by controlling or maintaining the circumferential speed of a tension roller (28) of the tensioning device (27) below or above the speed of the circumferential speed of the coating cylinder (5).

7. Process according to claim 6, wherein
the tension roller (28) is of smaller diameter than the diameter of the coating cylinder (5) and the coating cylinder and the tension cylinder are driven at the same rotational speed.

8. Process according to any of the preceding claims, wherein
the first web is formed by in-line coating an adhesive on a first film (14) and laminating a second film (15) onto the first film.

9. Process according to any of the preceding claims, wherein
the registration mark (13) is an optically or a magnetically identifiable mark.

10. Apparatus for carrying out the in-line lamination process according to any ones of claims 1 to 9, wherein it comprises :
- a lamination station (4) for laminating the first web on the second web comprising an adhesive coating cylinder (5) arranged for partially coating adhesive onto the first web (2),
- a motor (9) for driving the coating cylinder (5),
- a first sensor (21) arranged at a predetermined distance from the coating cylinder (5) for sensing the registration mark (13) on one of the two webs (2, 3),
- a second sensor (19) arranged for detecting the angular position of the coating cylinder (5),
- a control unit (20) for receiving the input from the first and second sensors (21, 19), determining the angular position of the coating cylinder (5) relative to the position of the registration mark (13) and varying the angular position of the coating cylinder (5) as a function of a set position of reference.

11. Apparatus according to claim 10, wherein
the variation of the angular position of the coating cylinder (5) is obtained by the control unit (20) arranged for varying the speed of the coating cylinder.

12. Apparatus according to claims 10 or 11, wherein
it further comprises a tension roller device (27) arranged upstream of the coating cylinder (5) for maintaining the first web (2) under a sufficient in-line tension.

13. Apparatus according to claims 10 or 11, wherein
the tension roller device (27) comprises a motor-driven tension cylinder (28) of diameter smaller than the diameter of the coating cylinder (5) and the device is driven at the same rotational speed as the rotational speed of the adhesive coating cylinder (5).

14. A laminate comprising a specific partially laminated pattern comprising:
- longitudinally and laterally spaced apart, adhesive-free non-laminated areas (6) between a first web (2) and a second web (3);
- registration marks (13) provided in the longitudinal direction, at regularly spaced intervals on at least one of the two webs,
- at least one longitudinally spaced indicia (32) such as a printed pattern, wherein the position of each non-laminated area (12) is precisely positioned relative to said indicia (32) within a longitudinal tolerance (L) lower than +/- 2 mm, preferably of 1.50 mm or lower.

## Patentansprüche

1. Verfahren zur In-line-Laminierung zum Herstellen eines Laminats (1), das ein bestimmtes teilweise laminiertes Muster umfasst, welches in Längsrichtung beabstandete klebstofffreie nicht laminierte Bereiche (6) zwischen einer ersten Bahn und einer zweiten Bahn umfasst;
wobei die erste Bahn von einem Beschichtungszylinder (5) teilweise mit einem Klebstoff beschichtet wird, um ein nicht fortlaufendes Klebemuster in Längsrichtung zu bilden, und die zweite Bahn (3) auf die erste Bahn (2) laminiert wird, um das Laminat zu bilden, wobei die beabstandeten klebstofffreien, nicht laminierten Bereiche (6) zwischen der ersten und zweiten Bahn (2, 3) liegen,
**dadurch gekennzeichnet, dass** die Winkelposition des Beschichtungszylinders (5) im Verhältnis zur ersten Bahn (2) während der Laminierung in Abhängigkeit von der Position einer Registrierungsmarkierung (13) angepasst wird, die an mindestens einer der zwei Bahnen vorgesehen ist;
und dass die Registrierungsmarkierung (13) in Längsrichtung in regelmäßigen Abständen an mindestens einer der zwei Bahnen vorgesehen ist.

2. Verfahren nach Anspruch 2, wobei
die Winkelposition des Beschichtungszylinders (5) im Verhältnis zu einer von der ersten und zweiten Bahn durch Bestimmen der Winkelposition des Beschichtungszylinders (5) in Bezug auf die relative Position der Registrierungsmarkierung (13) angepasst wird und die Winkelposition des Beschichtungszylinders (5) in Bezug auf eine Referenzposition in Abhängigkeit von der Abweichung der bestimmten Winkelposition des Beschichtungszylinders (5) zu einer Bezugsposition modifiziert wird.

3. Verfahren nach Anspruch 2, wobei
die Winkelposition des Beschichtungszylinders (5) durch Variieren der Drehzahl des Beschichtungszylinders modifiziert wird, derart, dass eine Verlängerung der Fläche des Zylinders im Verhältnis zu der Bahn (2) in Längsrichtung erreicht wird.

4. Verfahren nach Anspruch 3, wobei
der Druck des Beschichtungszylinders (5) auf die Bahn (2) so eingestellt wird, dass eine Verlagerung des Zylinders im Verhältnis zu der Bahn zugelassen wird, ohne Falten auf der Bahn zu erzeugen.

5. Verfahren nach einem der vorstehenden Ansprüche, wobei
die Spannung der ersten Bahn (2) in-line in Längsrichtung als Ergebnis der Anpassung der Winkelposition des Beschichtungszylinders (5) angepasst wird.

6. Verfahren nach Anspruch 5, wobei
die Spannung der Bahn (2) durch Steuern oder Beibehalten der Umfangsgeschwindigkeit einer Spannrolle (28) der Spannvorrichtung (27) unter- oder oberhalb der Umfangsgeschwindigkeit des Beschichtungszylinders (5) angepasst wird.

7. Verfahren nach Anspruch 6, wobei
die Spannrolle (28) einen kleineren Durchmesser als der Beschichtungszylinder (5) aufweist und der Beschichtungszylinder und der Spannzylinder mit derselben Drehzahl angetrieben werden.

8. Verfahren nach einem der vorstehenden Ansprüche, wobei
die erste Bahn durch In-line-Beschichten eines Klebstoffs auf eine erste Folie (14) und Laminieren einer zweiten Folie (15) auf die erste Folie gebildet wird.

9. Verfahren nach einem der vorstehenden Ansprüche, wobei
die Registrierungsmarkierung (13) eine optisch oder magnetisch erkennbare Markierung ist.

10. Vorrichtung zum Ausführen des In-line-Laminierungsverfahrens nach einem der Ansprüche 1 bis 9, wobei das Verfahren folgendes umfasst:
- eine Laminierungsstation (4) zum Laminieren der ersten Bahn auf die zweite Bahn, umfassend einen Klebstoffbeschichtungszylinder (5), der dazu angeordnet ist, die erste Bahn (2) teilweise mit Klebstoff zu beschichten,
- einen Motor (9) zum Antreiben des Beschichtungszylinders (5),
- einen ersten Sensor (21), der in einem vorgegebenen Abstand von dem Beschichtungszylinder (5) angeordnet ist, um die Registrierungsmarkierung (13) an einer der zwei Bahnen (2, 3) zu erfassen,
- einen zweiten Sensor (19), der zum Erkennen der Winkelposition des Beschichtungszylinders (5) angeordnet ist,
- eine Steuereinheit (20) zum Empfangen des Eingangs des ersten und zweiten Sensors (21, 19), Bestimmen der Winkelposition des Beschichtungszylinders (5) im Verhältnis zur Position der Registrierungsmarkierung (13) und Variieren der Winkelposition des Beschichtungszylinders (5) in Abhängigkeit von einer eingestellten Referenzposition.

11. Vorrichtung nach Anspruch 10, wobei
die Variation der Winkelposition des Beschichtungszylinders (5) erreicht wird, indem die Steuereinheit (20) dazu ausgebildet ist, die Drehzahl des Beschichtungszylinders zu variieren.

12. Vorrichtung nach Anspruch 10 oder 11, wobei
sie ferner eine Spannrollenvorrichtung (27) umfasst, die vor dem Beschichtungszylinder (5) angeordnet ist, um eine ausreichende In-line-Spannung der ersten Bahn (2) aufrechtzuerhalten.

13. Vorrichtung nach Anspruch 10 oder 11, wobei
die Spannrollenvorrichtung (27) einen motorisch angetriebenen Spannzylinder (28) mit einem Durchmesser umfasst, der kleiner als der Durchmesser des Beschichtungszylinders (5) ist, und die Vorrichtung mit der gleichen Drehzahl wie die Drehzahl des Klebstoffbeschichtungszylinders (5) angetrieben wird.

14. Laminat, das ein bestimmtes teilweise laminiertes Muster umfasst, umfassend:
- in Längsrichtung und Breitenrichtung beabstandete klebstofffreie nicht laminierte Bereiche (6) zwischen einer ersten Bahn (2) und einer zweiten Bahn (3);
- Registrierungsmarkierungen (13), die in Längsrichtung in regelmäßigen Abständen an wenigstens einer der zwei Bahnen vorgesehen sind,
- wenigstens eine in Längsrichtung beabstandete Angabe (32) wie etwa ein gedrucktes Muster,
wobei die Position jedes nicht laminierten Bereichs (12) im Verhältnis zu der Angabe (32) innerhalb einer Längstoleranz (L) von weniger als +/-2 mm, vorzugsweise von 1,50 mm oder weniger, präzise positioniert ist.

## Revendications

1. Procédé de stratification en ligne pour produire un stratifié (1) comprenant un motif partiellement stratifié spécifique comprenant des zones non stratifiées exemptes d'adhésif longitudinalement espacées (6) entre une première bande et une deuxième bande ;
dans lequel la première bande est partiellement revêtue d'un adhésif par un cylindre de revêtement (5) pour former un motif adhésif non continu dans la direction longitudinale et la deuxième bande (3) est stratifiée sur la première bande (2) pour former le stratifié avec les zones non stratifiées exemptes d'adhésif longitudinalement espacées (6) entre les première et deuxième bandes (2, 3),
**caractérisé en ce que** la position angulaire du cylindre de revêtement (5) par rapport à la première bande (2) est ajustée pendant la stratification en fonction de la position d'un repère d'alignement (13) fourni sur au moins une des deux bandes ;
et **en ce qu'**un tel repère d'alignement (13) est fourni dans la direction longitudinale à des intervalles espacés régulièrement sur au moins une des deux bandes.

2. Procédé selon la revendication 2, dans lequel
la position angulaire du cylindre de revêtement (5) est ajustée par rapport à l'une parmi la première ou la deuxième bande, en déterminant la position angulaire du cylindre de revêtement (5) par rapport à la position relative du repère d'alignement (13) et en modifiant la position angulaire du cylindre de revêtement (5) par rapport à une position de référence en fonction de la déviation de la position angulaire déterminée du cylindre de revêtement (5) vis-à-vis d'une position de référence.

3. Procédé selon la revendication 2, dans lequel
la position angulaire du cylindre de revêtement (5) est modifiée en faisant varier la vitesse de rotation du cylindre de revêtement de sorte qu'un déplacement de la surface du cylindre par rapport à la bande (2) est obtenu dans la direction longitudinale.

4. Procédé selon la revendication 3, dans lequel
la pression du cylindre de revêtement (5) sur la bande (2) est définie pour permettre un déplacement du cylindre par rapport à la bande sans former de plis sur la bande.

5. Procédé selon l'une quelconque des revendications précédentes, dans lequel
la tension de la première bande (2) est ajustée en ligne dans la direction longitudinale en conséquence de l'ajustement de la position angulaire du cylindre de revêtement (5).

6. Procédé selon la revendication 5, dans lequel
la tension de la bande (2) est ajustée en commandant ou en maintenant la vitesse circonférentielle d'un rouleau de tension (28) du dispositif tendeur (27) en dessous ou au-dessus de la valeur de la vitesse circonférentielle du cylindre de revêtement (5).

7. Procédé selon la revendication 6, dans lequel
le rouleau de tension (28) est de diamètre inférieur au diamètre du cylindre de revêtement (5), et le cylindre de revêtement et le cylindre de tension sont entraînés à la même vitesse de rotation.

8. Procédé selon l'une quelconque des revendications précédentes, dans lequel
la première bande est formée par revêtement en ligne d'un adhésif sur un premier film (14) et stratification d'un deuxième film (15) sur le premier film.

9. Procédé selon l'une quelconque des revendications précédentes, dans lequel
le repère d'alignement (13) est un repère optiquement ou magnétiquement identifiable.

10. Appareil pour effectuer le procédé de stratification en ligne selon l'une quelconque des revendications 1 à 9, où il comprend :
- un poste de stratification (4) pour stratifier la première bande sur la deuxième bande, comprenant un cylindre de revêtement d'adhésif (5) disposé pour revêtir partiellement un adhésif sur la première bande (2),
- un moteur (9) pour entraîner le cylindre de revêtement (5),
- un premier capteur (21) disposé à une distance prédéterminée du cylindre de revêtement (5) pour détecter le repère d'alignement (13) sur une des deux bandes (2, 3),
- un deuxième capteur (19) disposé pour détecter la position angulaire du cylindre de revêtement (5),
- une unité de commande (20) pour recevoir l'entrée des premier et deuxième capteurs (21, 19), déterminer la position angulaire du cylindre de revêtement (5) par rapport à la position du repère d'alignement (13) et faire varier la position angulaire du cylindre de revêtement (5) en fonction d'une position de référence établie.

11. Appareil selon la revendication 10, dans lequel
la variation de la position angulaire du cylindre de revêtement (5) est obtenue par l'unité de commande (20) disposée pour faire varier la vitesse du cylindre de revêtement.

12. Appareil selon les revendications 10 ou 11, où
il comprend en outre un dispositif de rouleau de tension (27) disposé en amont du cylindre de revêtement (5) pour maintenir la première bande (2) sous une tension en ligne suffisante.

13. Appareil selon les revendications 10 ou 11, dans lequel
le dispositif de rouleau de tension (27) comprend un cylindre de tension entraîné par moteur (28) de diamètre inférieur au diamètre du cylindre de revêtement (5) et le dispositif est entraîné à la même vitesse de rotation que la vitesse de rotation du cylindre de revêtement d'adhésif (5).

14. Stratifié comprenant un motif partiellement stratifié spécifique, comprenant :
- des zones non stratifiées exemptes d'adhésif longitudinalement et latéralement espacées (6) entre une première bande (2) et une deuxième bande (3) ;
- des repères d'alignement (13) fournis dans la direction longitudinale, à des intervalles espacés régulièrement sur au moins une des deux bandes,
- au moins une indication espacée longitudinalement (32) telle qu'un motif imprimé,
dans lequel la position de chaque zone non stratifiée (12) est précisément positionnée par rapport à ladite indication (32) dans les limites d'une tolérance longitudinale (L) inférieure à +/-2 mm, de préférence de 1,50 mm ou plus basse.
